# EUROPEAN PATENT SPECIFICATION

(11) **EP 2 083 369 B1**
(45) Date of publication and mention of the grant of the patent: **04.01.2012**
(21) Application number: 08001231.3
(22) Date of filing: 23.01.2008
(51) Int. Cl.: G06F 21/00

(54) **Automated configuration of mobile electronic devices**
Automatisierte Konfiguration mobiler elektronischer Geräte
Configuration automatique des dispositifs électroniques mobiles

(43) Date of publication of application: 29.07.2009
(73) Proprietor: OrgaPhone GmbH, 79199 Kirchzarten (DE)
(72) Inventor: Baldus, Lothar, 79199 Kirchzarten (DE); Gleichauf, Michael, 79364 Malterdingen (DE)
(74) Representative: Gleiss & Grosse

(56) References cited:
- WO-A-2007/030223
- US-A1- 2005 138 373

## Description

### BACKGROUND OF THE INVENTION

This invention relates to mobile electronic devices and the like communication systems. The invention is directed to a system and method for automatic initialization of a mobile electronic device for use. Upon initialization a user-specific graphic user interface (GUI) selectively activates, restricts and/or deactivates one or more functionality or applications on the mobile device. More particularly, the invention is directed to mobile phones for a telecommunication system.

Mobile electronic devices and in particular mobile phones are modern and popular telecommunication means. Today their fields of applications and uses are not restricted to business and office use, but also include recreational use and leisure-time activity. Mobile electronic devices are used by young children as well. Modern mobile electronic devices serve to provide value-added services including text-based massage systems, SMS, email and the like, and multi media based services, MMS television, video-on-demand and the like. There is a constant need to make operation and control of such mobile electronic devices easier, and more comfortable. There is also a need to make mobile electronic devices more safe, in particular in respect to children's use. It is required to restrict children's access to certain media contents. Also, children may incur high expenses when using their mobile phones. Parents or other authorities desire to control and restrict usage of the mobile devices in a variety of situations and for a variety of reasons.

For elderly and/or impaired users it is of particular value to have a save and reliable operator interface on their mobile device to ensure easy and safe performance of the selected functionality. In particular a safe contact to persons, for example, call-centers or guardian systems and the like is needed. Elderly people often refrain from using new mobile device, because they fear the modern and rather sophisticated functionalities in the new devices which they expect to be rather complex in operation. They tend to keep the old communication means which they get used to. As a result, these persons are kept from the access to newly developed value-added services which could be of great benefit for them.

In other instances the same mobile electronic device may temporarily be used by different persons and/or in different situations. For example, children and parents may use the same device or the same device is used for business during recreation or sport activities.

These various needs are tried to meet by a plurality of mobile devices, that are particularly designed for each field of use, for example, children, elderly persons, impaired persons, for business, sports or recreational use. The provision of such specialty devices is in contradiction with reasonable development and production costs, compatibility, and operation safety. It is therefore an object to provide a system and method for improving the operation comfort of a mobile electronic device.

Besides the issues of operation comfort and safety, there is a constant need to limit and/or control the resources used during operation of a mobile electronic device. Such resources not only include memory usage, CPU-time, and power consumption, but also bandwidths and timeslot uses in the communication channels. The latter is of major importance in wireless communication, in particular wide area networks, UMTS, and GPRS-based systems. Wireless communication via radio transmission (RF) is also suspected to have adverse effects on the health of the user of the mobile device. This is particularly relevant if the users are young children or impaired or elderly people. These persons, due to their physiological condition, are known to be more susceptible to the adverse effects of RF and electromagnetic radiation. It is therefore an object to provide a system and method for improving the allocation of the technical resources for a mobile electronic device.

There is also a constant need to improve operational or performance reliability of a mobile electronic device. Operating errors caused by the user are a prominent problem in modern mobile devices. Sensitive system settings of the mobile device are normally available through the operating system of the device. They not only lead to malfunction but may also result in complete failure of the device or its essential functions. Unexpected malfunctions or failure that have been inadvertently initiated may cause great damage and harm to the user, for example, in emergency situations. It is therefore an object to provide a system and method for improving the operational reliability of a mobile electronic device.

In most cases mobile electronic devices are operated and controlled by the user through a graphic user interface (GUI). The user gains access to the mobile device's functionalities through the GUI. GUIs that restrict the mobile device's access to communication services are known in the art. GUIs may enable an administrator, in particular a telecommunication service provider, to restrict or control telecommunication usage of the mobile phone. A GUI may also manage restrictions to the functionalities. Also applications are known that run on the mobile device to provide a GUI that confer additional operation comfort. Normally such GUIs are started by user command.

### SUMMARY OF THE INVENTION

WO 2007/030223 A2 discloses a system and method for remotely controlling device functionality based on the occurrence of certain predetermined conditions. A link may be established between a device and a trusted server to provide an association between various conditions that may be detected at the device and actions that are to be taken on the device. US 2005/0138373 A1 concerns a programme that provides a customized GUI after the system receives a user login information and retrieves a user profile. Based on the retrieved user profile, a customized user interfaced is presented to the user. Only applications and information needed by the user to perform an enterprise defined function are presented to the logged-on user in the customized GUI.

The technical problem underlying the present invention primarily is to provide methods and means for increasing operational reliability and safety of a mobile electronic device. A particular technical problem is the reduction in the allocation of technical resources, including memory, battery power and communication bandwidth. Another particular technical problem is the increase in operational reliability and safety when it is used by different individuals or at different situations.

The present invention is not limited to mobile electronic devices for wireless communication, for example cellular telecommunication systems such as mobile phones. The invention also includes mobile devices normally used for navigation, such as GPS or Galileo based navigation systems, mobile devices that control other appliances via local communication such as remote controls or car diagnosis systems and the like, devices that control functionalities of a vehicle such as a driver information system and the like, mobile multi media devices such as media players, photo cameras, video cameras, camcorders, as well as handheld game consoles and the like.

The underlying technical problem is particularly solved by a method for initializing a mobile electronic device for use by communicating an individual or user-specific GUI to the mobile device upon initialization. The mobile device comprises at least one or more, preferably pre-installed, application or functionality that can be activated, deactivated or restricted upon control of the user-specific GUI. Such applications and functionalities may be provided by the mobile device's original operating systems. Such operating systems include, but are no limited to Microsoft Windows® Mobile 6, Symbian®, Microsoft Windows® CE and the like. The mobile device further comprises at least one communication means for the communication with one or more server. The communication means are preferably provided through the mobile device's intrinsic functions or operating system. The communication includes wireless as well as wired communication. Wireless communication is preferred. Among those, WLAN, Wi-Fi, GSM, GPRS, 3G/UMTS, EDGE and the like are preferred. The server is external to the mobile electronic device.

According to the invention, the method mainly comprises the step of receiving from the server a user-specific graphic user interface (GUI) which is able to selectively activate and/or control and/or restrict access to or operation of one or more of set applications for use, wherein the server is located or executed externally from the mobile device and wherein the user-specific GUI is updated in the mobile device at a predefined interval and/or upon user-initiated changes and the updated user-specific GUI activates, deactivates and/or re-activates one or more of the applications.

The invention thus provides an integrated "zero configuration technology" that offers an interface which safely allows the user to use one or more pre-selected functionalities or applications of the mobile device without the need of any further configuration. This zero configuration technology can easily provide an age based, situation- and/or user-specific GUI to the user, preferably upon the very first operation, i.e. initialization, of the device.

The invention particularly provides a method that comprises at least the following steps: an identifier (ID), that is specific to the user and/or to the mobile device, is communicated from the mobile device to the external server; at the server, a user-specific GUI is selected according to the ID; and the selected user-specific GUI is communicated from the server to the mobile device. Upon an optional re-boot of the device, which is preferably initiated by the external server, the user-specific GUI selectively activates, restricts and/or deactivates one or more of applications for use with the mobile device.

In one embodiment the user-specific GUI that is selectively communicated to the mobile device selectively activates one, two or more applications for use, which have been previously inactive or deactivated in the mobile device. The user-specific GUI thus restricts the mobile device's functionalities to the activated applications. The user-specific GUI may also selectively deactivate one or more applications, which have been active in the mobile device before, and, by that, may limit or restrict the mobile device's functionalities. In a preferred embodiment the user-specific GUI also controls access to a user-specific content which is selectively transferred from an external server to the mobile device. In another preferred embodiment the user-specific GUI adds at least one further or additional functionality to the mobile device. Such an additional functionality may not be originally present or comprised in the mobile device. Additional functionalities include, but are not limited to emergency call, concierge services, call centre access, emergency plans, content services like weather report, business news, and the like.

The mobile device logs into a communication path or network and, upon optional verification, communicates its ID in the path or network. Preferably upon first initialization of the mobile electronic device, for example, in connection with the first power-up of the device a GUI specific for that mobile device is communicated to the mobile device. Preferably user-specific GUI controls all functionalities of the mobile device. The method and system may provide at least two stages: a "pre-selection stage" and an "initialization stage". At the "pre-selection stage" the user or administrator (e.g. service provider) may determine or select the user-specific GUI. Thereby the functionalities available to the mobile device are determined. For that, the user may log in at a web-based portal. The web-based portal preferably provides an ERP-system. Upon contract the user receives a login-ID and password to gain further access to a web-based configuration page. At the configuration page he may select the type of his mobile device and the operating system. He may then select from pre-selected user interfaces which may be age-specific and/or situation-specific.

At the "initialization stage" the selected user-specific GUI is communicated to the individual mobile device as described herein. An update-server connects to the mobile device. The update-server may set up a communication with the mobile device in a pre-defined interval. If a communication is established with the mobile device the user-specific GUI or updates thereof from the server, in particular a file server, are transferred to the mobile device via the update server. All content related data and files, such as updates of the user-specific GUI, are communicated to the mobile device via the server.

According to the invention the user-specific GUI is stored in the mobile device and is active at each use of the mobile device. The user-specific GUI fully takes over the control of the mobile device's applications and functionalities. The user-specific GUI preferably fully replaces the GUI originally provided by the mobile device's operating system. In a preferred embodiment no direct access to the operating system is possible.

The user-specific GUI selects, controls, and provides user-specific functionalities to the mobile device. The functionalities may be selected or pre-selected by the user or for the user, for example, by an administrator or service provider. In one preferred embodiment the user pre-selects the user-specific GUI from one or more pre-configured GUIs. Selection or pre-selection preferably takes place in a web-based environment, preferably accessible via Internet. The user may select or preselect or may freely configure the appearance and/or functionality of his mobile electronic device. Configuration or selection is preferably performed at a special configuration website. In a preferred embodiment the user-specific GUI is updated in the mobile device at a predefined interval and/or upon user-initiated changes and the updated user-specific GUI activates, deactivates and/or re-activates one or more of the said applications.

The invention may also provide at least one additional value-added services which will be available on or via the mobile device. In a preferred embodiment additional data is communicated from the server to the mobile device at a predefined interval, upon user-initiated selections and/or changes in the contents. The transferred additional data is preferably selected from: value-added services and user-specific contents. An automatic start-up may start the user-specific GUI on the mobile device. The user-specific GUI may not be configured or inactivated on the mobile device by user operation.

In a preferred embodiment the server further comprises one or more update-server. The update-server may communicate the user-specific GUI or updates thereof to the mobile device. The availability of the user-selected application for use in the mobile device may be controlled by the update-server by communicating the user-specific GUI or updates thereof from the update-server to the mobile device.

The user-specific GUI provided according to the present invention is reliable in operation. It does not require additional user operations such as email re-confirmation or selection of functionalities at the mobile device itself. The user-specific GUI is automatically loaded, and installed and activated at the mobile device upon initialization without the knowing of the user. The user may see "his" individual GUI, specifically designed for him and for the actual situation. He may be unsuspecting that some of the mobile device's intrinsic functionalities are not available to him.

In a further embodiment the user-specific GUI may inform the user visually about the actual battery status. In case the battery status falls below a pre-defined or user defined level an external service, for example a call-center or concierge service is automatically contacted. The external service may automatically run a routine which preferably is a user-defined or pre-selected emergency plan. According to the invention, the user-specific GUI allows extended services which may be essential to the function of the mobile device and/or the safety of the user. This is of particular importance in connection with children or elderly or impaired persons.

In a preferred embodiment the user-specific GUI provides an emergency system. Such emergency functionality is preferably provided as a selectable "emergency button" appearance on the GUI. Upon activation of the emergency button, a pre-configured emergency plan may be activated and carried out. By that, the personal security of the mobile device's user is greatly enhanced.

In another preferred embodiment the user-specific GUI provides an additional extended view which is a content-activated change in the appearance of the GUI. The appearance of the user-specific GUI may change to support a more detailed display of value-added services or data that is updated to the mobile device via the server.

In a further preferred embodiment a multi-information-object is provided which, upon user activation changes the appearance of the GUI for a more detailed display of the requested information. After a pre-defined interval the GUI returns to its previous appearance.

In another preferred embodiment the user-specific GUI provides a kids-security-tool which restricts display or replay of sensitive media contents. This is particularly accomplished by an integrated text and video analysis system.

In yet another preferred embodiment the user-specific GUI provides a "hot-touch-technology" functionality which allows "intelligent" menu operation by detecting and storing the operation performance and habits of the user and then provides easy and preferred access to services and functionalities the user is preferably using.

In yet another preferred embodiment the user-specific GUI improves operational reliability by providing a "twice-touch-action" functionality which prevents from inadvertent operation of services and functionalities as, for example, triggered by touching the touch sensitive display with the cheek. The "twice-touch-action" functionality may require an express reconfirmation by the user.

In yet another preferred embodiment the user-specific GUI provides easy and safe access to a sophisticated security and information system to provide rather complex functionalities. Such functionalities include, but are not limited to, reading out text based massages such as SMS and e-mail, answering voice massages, reminder systems including scheduler and extended alarm functions and voice activated dialing.

Due to the user-specific GUI the user need not be aware of whether the chosen functionality is actually running locally on his mobile device or is provided through the external server. By that, the user may gain access to more complex functionalities yet unavailable to mobile devices due to limited computing capabilities of the mobile devices. At the same time, this "outsourcing" of functionalities can decrease resource allocation on the mobile device. In a preferred embodiment the user-specific GUI is operated in a pure "terminal mode" wherein nearly all or all functionalities that are available at the mobile device through the GUI are provided through one or more external servers. By that, hardware or software design of a mobile device can be reduced to a minimum functionality. All value-added services as well as primary telecommunication services may be provided through external servers. For example, the common GPRS channel may be used only for local communication whereas, for distance calls in another country a voice-over-IP communication is set up, preferable over a mobile VPN channel. The user-specific GUI automatically controls access to various services, internal and external functionalities, without the need of further user commands or interaction.

In another preferred embodiment the user-specific GUI may automatically restrict access to preferably all data stored locally in the mobile device. The user-specific GUI may also automatically restrict or deactivate all functionalities of the mobile device. This is of particular importance in case the mobile device is lost or stolen. The mobile device can be fully inactivated simply through an update of the user-specific GUI.

The invention also provides a mobile electronic device, comprising: one or more applications, that can be activated, and communication-means for retrieving from a server a user-specific graphic user interface (GUI) that is able to selectively activate, restrict and/or deactivate one or more of said applications for use with the mobile device. The mobile device may further comprise an operating system to control communication, execution of one or more of the applications and of the user-specific GUI.

The present invention also provides a computer program, programmed to run the process according to the method described hereinabove.

### DETAILED DESCRIPTION OF THE INVENTION

Hereinafter the invention is described in more detail.

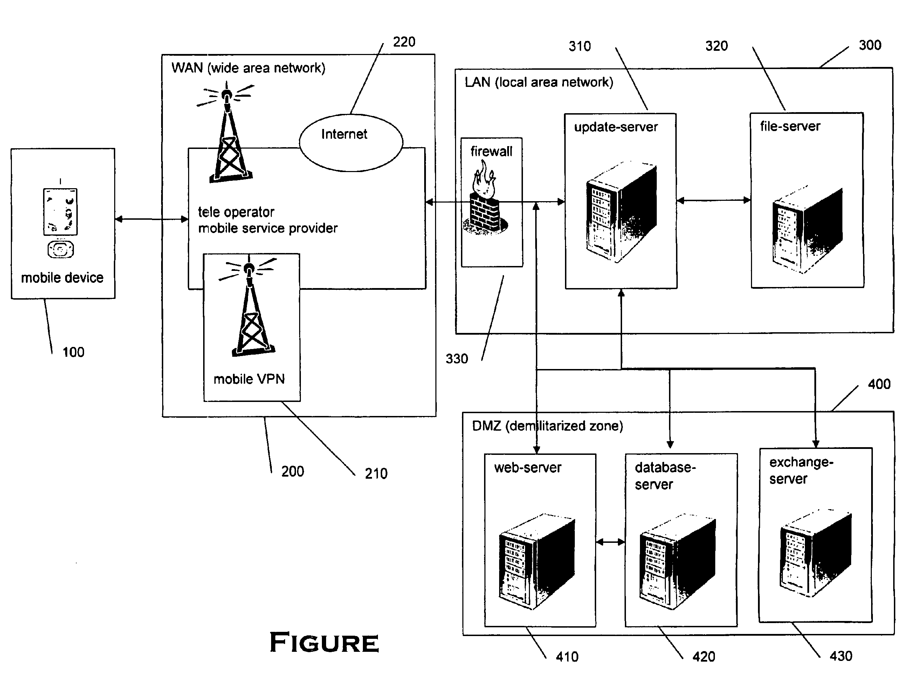

The figure depicts a preferred embodiment of the system architecture.

The system comprises a mobile device (100), a wide area network (200) or air interface, and an external server which in the particular example is a local area network (300). The local area network (300) comprises an update server (310) which is in communication with a file server (320). Optionally the local area network comprises a firewall (330).

The external server or local area network (300) communicates with the mobile device (100) via a wide area network (200). The wide area network (200) is particularly comprised of the internet (220) and/or supports a mobile virtual private network (VPN) tunnel (210). The wide area communication is controlled via a tele operator or telecommunication network provider.

More particularly, the external server, in particular the update server (310) communicates with a demilitarized zone (400). The demilitarized zone is comprising at least one web server (410) which is in communication with a data base server (420). The web server (410) contains the website and web shop for GUI configuration or selection, which is provided as an ERP-system. The data base server (420) contains the data base of the ERP and the web shop. The web server (410) is preferably protected by the firewall (330). The web shop may only be accessed after a successful log-in on the login-server. The web shop's products are physically existent on the file server (320).

The demilitarized zone (400) further comprises at least one exchange server (430). The exchange server (430) communicates with the update server (310) of the local area network (300).

In the first initialization phase the mobile device (100) tries to log in on, preferably via a mobile VPN tunnel (210). The mobile device (100) communicates an identifier (ID) into the WAN (200). The update server (310) establishes communication with the mobile device (100). A user-specific GUI is selected according to the mobile device's ID. The update server (310) transfers the user-specific GUI or updates thereof to the mobile device (100). For the user-specific GUI to become the effective GUI on the mobile device (100) the mobile device reboots.

The mobile device (100) only logs in to the update server (310) to send data. When it should receive data or a new GUI or GUI update, the update server (310) establishes contact with the mobile device (100). The update server (310) also provides updates of content services or the user-specific GUI at pre-defined intervals and/or upon request of the user or administrator, for example the service provider. The update server (310) synchronizes the mobile device (100) and at the same time transfers and exchanges the content and data.

The exchange server (430) is responsible for incoming and outgoing mail. In a pre-defined interval and/or when there are new contents available, the exchange server (430) communicates with the update server (310) to provide update data to the mobile device (100). In another situation when new data is available on the file server (320), the file server (320) communicates with the update server (310) to update data to the mobile device (100).

In the following update services procedures to provide updated user-specific GUIs for his mobile device are given as typical examples:

The user would like a new ring tone. Either the log-in takes place from the mobile device (100) over the update server (310), or the user or administrator logs into the web server (410) portal by internet. The user may also call a call centre service which is accessible over the user-specfic GUI as an additional functionality confered by the user-specfic GUI. Then the user is verified (log-in with password) at the portal (=web server (410) and ERP), or by phone in the call centre. The user chooses the desired content from the web shop. This is done either by phone (call-centre) or by web shop selection. The ERP transfers the desired product's information to the update server (310). The update server (310) contacts the mobile and sends the update of the user-specific GUI, which is loaded from the file server (320), to the mobile device (100). The mobile device is restarted to activate the updated user-specific GUI.

The user would like to use a text based communication. The user inputs new data (e.g. email) into the mobile device (100) via the GUI. The GUI/mobile device (100) generates an e-mail to the exchange server (430). The exchange server (430) receives the e-mail and transfers the data to the data base server (420).

In an alternative apporach, the exchange server (430) receives the e-mail and transfers the data as a stream to the update server (310). The update server (310) verifies the stream and transfers it to the data base server (420). The data is also available to the user in the web-based ERP.

## Claims

1. A method for initializing a mobile electronic device for use, the mobile device comprising one or more applications, that can be activated, restricted or deactivated, and communication-means to communicate with one or more server, comprising:
transmitting a user-specific graphic user interface (GUI), that selectively activates, restricts and/or deactivates one or more of said applications for use, from the server to the mobile device,
wherein the server is located or executed externally from the mobile device and wherein the user-specific GUI is updated in the mobile device at a predefined interval and/or upon user-initiated changes and the updated user-specific GUI activates, deactivates and/or re-activates one or more of the applications.

2. The method according to any one of the preceding claims, comprising:
communicating an identifier (ID), specific to the user and/or mobile device from the mobile device to the server;
selecting the user-specific GUI according to said ID; and
communicating the selected user-specific GUI from the server to the mobile device.

3. The method according to any one of the preceding claims, wherein the application activated for use is a user-selectable application that was specifically pre-selected for or by the user in a preceding step

4. The method according to claim 3, wherein the user pre-selects the user-specific GUI from one or more pre-configured GUIs.

5. The method according to any one of the preceding claims, wherein additional data is communicated from the server to the mobile device at a predefined interval and/or upon user-initiated changes.

6. The method according to claim 5, wherein the additional data is selected from: value-added services and user-specific contents.

7. The method according to any one of the preceding claims, the server comprising one or more update-server, wherein the update-server communicates the user-specific GUI or updates thereof to the mobile device.

8. The method according to claim 7, wherein the availability of the user-selected application for use in the mobile device is controlled by the update-server by communicating the user-specific GUI or updates thereof from the update-server to the mobile device.

9. The method according to any one of the preceding claims, wherein the user-specific GUI is stored in the mobile device and is active at each use of the mobile device.

10. The method according to any one of the preceding claims, wherein the user-specific GUI controls and/or restricts age-specific contents and/or applications of the mobile device.

11. A mobile electronic device, comprising:
one or more applications, that can be activated, and
communication-means for retrieving from an externally located or executed server a user-specific graphic user interface (GUI) that is able to selectively activate, restrict and/or deactivate one or more of said applications for use with the mobile device,
wherein the user-specific GUI is updated in the mobile device at a predefined interval and/or upon user-initiated changes and the updated user-specific GUI activates, deactivates and/or re-activates one or more of the applications.

12. The mobile electronic device according to claim 11, comprising an operating system to control communication, execution of one or more of the applications and of the user-specific GUI.

13. A computer program, programmed to run the process according to any one of claims 1 to 10.

## Patentansprüche

1. Verfahren der Initialisierung einer mobilen elektronischen Einheit zu deren Benutzung, wobei die mobile Einheit eine oder mehrere Anwendungen, die aktiviert, beschränkt oder deaktiviert werden können, sowie Kommunikationsmittel zur Kommunikation mit einem oder mehreren Servern enthält, enthaltend:
Übertragen von dem Server zu der mobilen Einheit einer benutzerspezifischen grafischen Benutzeroberfläche (GUI), welche selektiv eine oder mehrere dieser Anwendungen zur Benutzung aktiviert, beschränkt und/oder deaktiviert,
wobei der Server außerhalb der mobilen Einheit lokalisiert ist oder ausgeführt wird und wobei die benutzerspezifische GUI in vordefinierten Intervallen und/oder nach von dem Benutzer veranlassten Änderungen in der mobilen Einheit aktualisiert wird und die aktualisierte benutzerspezifische GUI eine oder mehrere der Anwendungen aktiviert, deaktiviert und/oder reaktiviert.

2. Das Verfahren nach einem der vorstehenden Ansprüche, enthaltend:
Übertragen einer Identifikation (ID), welche spezifisch für den Benutzer und/oder die mobile Einheit ist, von der mobilen Einheit an den Server;
Auswählen der benutzerspezifischen GUI gemäß dieser ID; und
Übertragen der ausgewählten benutzerspezifischen GUI von dem Server zu der mobilen Einheit.

3. Das Verfahren nach einem der vorstehenden Ansprüche, wobei die zur Benutzung aktivierte Anwendung eine vom Anwender auswählbare Anwendung ist, die in einem vorangehenden Schritt für oder durch den Benutzer spezifisch vorausgewählt wurde.

4. Verfahren nach Anspruch 3, wobei der Benutzer die benutzerspezifische GUI aus einer oder mehreren vorkonfigurierten GUIs vorauswählt.

5. Das Verfahren nach einem der vorstehenden Ansprüche, wobei zusätzliche Daten in einem vordefinierten Intervall und/oder nach von dem Benutzer veranlassten Änderungen von dem Server zu der mobilen Einheit übertragen werden.

6. Verfahren nach Anspruch 5, wobei die zusätzlichen Daten ausgewählt sind aus Mehrwertdienste und benutzerspezifischen Inhalten.

7. Verfahren nach einem der vorstehenden Ansprüche, wobei der Server ein oder mehrere Aktualisierungsserver aufweist, wobei der Aktualisierungsserver die benutzerspezifische GUI oder deren Aktualisierungen an die mobile Einheit überträgt.

8. Verfahren nach Anspruch 7, wobei die Verfügbarkeit der vom Benutzer ausgewählten Anwendung zur Benutzung in der mobilen Einheit über den Aktualisierungsserver gesteuert wird, indem die benutzerspezifische GUI oder Aktualisierungen davon von dem Aktualisierungsserver an die mobile Einheit übertragen werden.

9. Das Verfahren nach einem der vorstehenden Ansprüche, wobei die benutzerspezifische GUI in der mobilen Einheit gespeichert ist und bei jeder Benutzung der mobilen Einheit aktiv ist.

10. Verfahren nach einem der vorstehenden Ansprüche, wobei die benutzerspezifische GUI altersspezifische Inhalte und/oder Anwendungen der mobilen Einheit steuert und/oder beschränkt.

11. Mobile elektronische Einheit, enthaltend:
eine oder mehrere Anwendungen, die aktivierbar sind, und
Kommunikationsmittel, um von einem extern lokalisierten oder ausgeführten Server eine benutzerspezifische grafische Benutzeroberfläche (GUI) zu beziehen, welche in der Lage ist, selektiv eine oder mehrere dieser Anwendungen zur Benutzung mit der mobilen Einheit selektiv zu aktivieren, zu beschränken und/oder zu deaktivieren,
wobei die benutzerspezifische GUI in der mobilen Einheit in einem vorbestimmten Intervall und/oder nach von dem Benutzer veranlassten Änderungen aktualisiert wird und die aktualisierte benutzerspezifische GUI eine oder mehrere der Anwendungen aktiviert, deaktiviert und/oder reaktiviert.

12. Mobile elektronische Einheit nach Anspruch 11, enthaltend ein Betriebssystem, welches die Kommunikation, die Ausführung der einen oder mehreren Anwendungen und der benutzerspezifischen GUI steuert.

13. Computerprogramm, programmiert, um das Verfahren nach einem der Ansprüche 1 bis 10 auszuführen.

## Revendications

1. Procédé d'initialisation d'un dispositif électronique mobile à utiliser, le dispositif mobile comprenant une ou plusieurs applications qui peuvent être activées, limitées ou désactivées, et un moyen de communication pour communiquer avec un ou plusieurs serveurs, comprenant :
la transmission d'une interface utilisateur graphique (GUI) spécifique à l'utilisateur qui active, limite et/ou désactive sélectivement une ou plusieurs desdites applications à utiliser du serveur vers le dispositif mobile,
dans lequel le serveur est localisé ou exécuté de manière externe depuis le dispositif mobile et dans lequel la GUI spécifique à l'utilisateur est mise à jour dans le dispositif mobile à un intervalle prédéfini et/ou suite à des changements initiés par l'utilisateur et la GUI spécifique à l'utilisateur mise à jour active, désactive et/ou réactive une ou plusieurs des applications.

2. Procédé selon l'une quelconque des revendications précédentes, comprenant :
la communication d'un identifiant (ID) spécifique à l'utilisateur et/ou au dispositif mobile du dispositif mobile au serveur ;
la sélection de la GUI spécifique à l'utilisateur en fonction dudit ID; et
la communication de la GUI spécifique à l'utilisateur sélectionnée du serveur au dispositif mobile.

3. Procédé selon l'une quelconque des revendications précédentes, dans lequel l'application activée pour être utilisée est une application pouvant être sélectionnée par l'utilisateur qui a été spécifiquement présélectionnée pour ou par l'utilisateur dans une étape précédente.

4. Procédé selon la revendication 3, dans lequel l'utilisateur présélectionne la GUI spécifique à l'utilisateur à partir d'une ou plusieurs GUI préconfigurées.

5. Procédé selon l'une quelconque des revendications précédentes, dans lequel des données supplémentaires sont communiquées du serveur au dispositif mobile à un intervalle prédéfini et/ou suite à des changements initiés par l'utilisateur.

6. Procédé selon la revendication 5, dans lequel les données supplémentaires sont sélectionnées parmi : des services à valeur ajoutée et du contenu spécifique à l'utilisateur.

7. Procédé selon l'une quelconque des revendications précédentes, le serveur comprenant un ou plusieurs serveurs de mise à jour, dans lequel le serveur de mise à jour communique la GUI spécifique à l'utilisateur ou des mises à jour de celle-ci au dispositif mobile.

8. Procédé selon la revendication 7, dans lequel la disponibilité de l'application sélectionnée par l'utilisateur pour être utilisée dans le dispositif mobile est commandée par le serveur de mise à jour en communiquant la GUI spécifique à l'utilisateur ou des mises à jour de celle-ci du serveur de mise à jour au dispositif mobile.

9. Procédé selon l'une quelconque des revendications précédentes, dans lequel la GUI spécifique à l'utilisateur est stockée dans le dispositif mobile et est active à chaque utilisation du dispositif mobile.

10. Procédé selon l'une quelconque des revendications précédentes, dans lequel la GUI spécifique à l'utilisateur commande et/ou limite du contenu et/ou des applications spécifiques à l'âge du dispositif mobile.

11. Dispositif électronique mobile, comprenant :
une ou plusieurs applications qui peuvent être activées, et
un moyen de communication pour récupérer à partir d'un serveur situé ou exécuté de manière externe une interface utilisateur graphique (GUI) spécifique à l'utilisateur qui est capable d'activer, limiter et/ou désactiver sélectivement une ou plusieurs desdites applications à utiliser avec le dispositif mobile,
dans lequel la GUI spécifique à l'utilisateur est mise à jour dans le dispositif mobile à un intervalle prédéfini et/ou suite à des changements initiés par l'utilisateur et la GUI spécifique à l'utilisateur mise à jour active, désactive et/ou réactive une ou plusieurs des applications.

12. Dispositif électronique mobile selon la revendication 11, comprenant un système d'exploitation pour commander la communication, l'exécution d'une ou plusieurs des applications et de la GUI spécifique à l'utilisateur.

13. Programme informatique programmé pour exécuter le procédé selon l'une quelconque des revendications 1 à 10.
